# EUROPEAN PATENT APPLICATION

(11) **EP 4 843 770 A1**
(43) Date of publication of application: **25.11.2026**
(21) Application number: 26179671.8
(22) Date of filing: 19.05.2026
(51) Int. Cl.: B32B 3/26, B32B 27/08, B32B 27/10, B32B 27/12, B32B 27/32, B32B 5/02

(54) **BREATHABLE LIDDING FOR MEDICAL PACKAGING**

(30) Priority: 21.05.2025 US 202563809745 P
(71) Applicant: Winpak Ltd., Winnipeg, MB R3J 3T3 (CA)
(72) Inventor: Bilgen, Mustafa, Fayettville, 30215 (US); Farkhondehnia, Mohammad, Winnipeg, R3L 0H3 (CA); Ranville, Bradley, Winnipeg, R2V 2K9 (CA); Rafei, Mehdi, Winnipeg, R3Y 1H6 (CA)
(74) Representative: Potter Clarkson

(57) **Abstract**

A breathable laminate is provided. The breathable laminate includes a porous film. The porous film includes a heat sealable polymeric material. The breathable laminate further includes a backing substrate. The backing substrate includes a porous material. The porous film is affixed to the backing substrate via patterned lamination. Further, a container or a bag is provided. The container includes a breathable laminate. The container further includes a secondary structure. A portion of the breathable laminate is heat sealed to the secondary structure.

## Description

### Field of the Disclosure

The present disclosure is generally directed to breathable lidding for medical packaging, and more particularly, to porous films and breathable laminates for use in medical packaging.

### Background

Packaged medical devices (such as syringes or catheters) are often sterilized via ethylene oxide (EtO) sterilization. During EtO sterilization, EtO gas passes through the packaging of the medical device to sterilize the enclosed device. Accordingly, the packaging of the medical device must be sufficiently porous to allow EtO gas to pass through, while still providing a microbial barrier and/or a particulate barrier to prevent contamination of the medical device.

Two conventionally used materials in the medical device packaging industry to provide breathability and sterilization capability are high-density polyethylene (HDPE), such as TYVEK^{®} sold by DUPONT^{™}, and medical-grade paper. HDPE and medical-grade paper alone lack heat seal properties required to seal the substrate to a secondary structure (such as a rigid tray). Conventionally, liquid heat seal coatings are applied to the HDPE and the medical-grade paper to allow these materials to heat seal to a secondary structure. However, applying these liquid heat seal coatings significantly increases manufacturing complexity and cost. Another key drawback of HDPE is its low melting point. With a melting point around 135°C, HDPE may begin to melt at heat-sealing temperatures required to sufficiently seal the material to the secondary structure.

### Summary of the Disclosure

The present disclosure is generally directed to breathable lidding, a breathable bag, or breathable pouch material for medical packaging. In particular, the breathable lidding or the breathable pouch material is used for medical device packaging to enable sterilization via, for example, ethylene oxide (EtO) gas sterilization, while still providing a microbial barrier and/or a particulate barrier to prevent contamination of the medical device. Similar to building grade house wrap or breathable water barriers, the breathable lidding of the present disclosure allows the desired EtO gas to pass through while stopping unwanted water, dust, and/or contaminates. The breathable lidding may be embodied as a breathable laminate. The breathable laminate may include a porous film affixed to a backing substrate. The backing substrate may also be breathable. The porous film acts as a sealing layer to seal to a secondary structure (such as a tray or second film). The porous film comprises a heat sealable, polymeric material, such as polyolefin. The polymeric material may be monoaxially or biaxially oriented. Preferably, the polymeric material is biaxially oriented, resulting in more uniform physical and mechanical properties and cross directions. Further, the porous film may have a melting point between about 80°C to about 200°C. Accordingly, implementing the porous film in the breathable laminate instead of high-density polyethylene (HDPE) expands the range of temperatures available to heat seal the breathable lidding to the secondary structure, thereby providing greater flexibility during manufacturing. The backing substrate may be a breathable, woven or non-woven, natural or synthetic, fibrous material, such as medical-grade paper. In other examples, the backing substrate could be another porous polymeric film.

The porous film is affixed to the backing substrate via patterned lamination, such as patterned adhesive lamination or patterned heat lamination. In patterned lamination, a pattern is created on either the porous film or the backing substrate. Using the lamination pattern rather than continuous lamination preserves the overall breathability of the laminate while eliminating the need to apply a heat seal coating to the backing substrate, resulting in cost and time savings. The lamination pattern may include an array of adhesive shapes, such as dots, circles, ovals, rectangles, lines, stars, rhomboids, etc. The coverage of the lamination pattern adhesive can be adjusted to achieve the desired breathability of the overall breathable laminate. In the case of patterned adhesive lamination, the lamination pattern is embodied as a patterned adhesive applied to the backing substrate to affix the backing substrate to the porous film. In the case of patterned heat lamination, the lamination pattern is embodied as a heated contact pattern formed on the porous film to affix the porous film to the backing substrate. Accordingly, patterned heat lamination does not require an additional adhesive to affix the porous film to the backing substrate, and instead simply melts the heated contact pattern into the porous film to enable the patterned lamination process. Further, sealing the porous film to the secondary structure results in the formation of seal evidence providing visible proof of the formation of the heat seal to the secondary structure.

The porous film may be relatively thin, such as between about 5 µm and about 30 µm, to maintain breathability while limiting material costs. In particular, the porous film may be a 9EP breathable membrane sold by ENTEK^{®}. The porous film may have a Gurley value of at least about 10 seconds per 100 cc and a nominal porosity of about 44%. The backing substrate may be thicker than the porous film, such as between about 5 µm and about 1000 µm, to provide a physical structure to the breathable laminate. The backing substrate may have a Gurley value of at least about 10 seconds per 100 cc. The patterned adhesive may include an array of adhesive contacts. These adhesive contacts may be made from a solvent-based adhesive such as polyurethane. In other examples, the adhesive contacts may be made from water-based or solventless adhesives. The adhesive contacts may be substantially circular and thus may have diameters of about 0.001 to 1.00 cm and may be spaced about 0.001 to 1.00 cm apart. Accordingly, the breathable laminate formed by the porous film, the backing substrate, and the patterned adhesive may have a Gurley value of less than 1500 seconds per 100 cc, such as 209 seconds per 100 cc.

The breathable laminate may be sealed to the secondary substrate at a heat seal temperature from about 80°C to about 200°C. In some examples, the secondary structure may be substantially rigid, such as a tray. In other examples, the secondary structure may be flexible, such as another film or substrate. Once heat sealed, the peel strength between the breathable laminate and the secondary substrate may be from 0.3 lbf/inch to 6 lbf/inch.

The breathable laminate may be manufactured by applying an adhesive-solvent to the backing substrate, such as a via a template comprising an array of holes or an industrial-engraved cylinder equipped with a pattern. The adhesive-solvent is then heated at a solvent removal temperature (such as about 40°C to 100°C) for a solvent removal period (such as about 0.2 to about 2 minutes) to remove the solvent, thereby forming the patterned adhesive. The porous film is then arranged on the patterned adhesive, and the porous film and the patterned adhesive are pressed together to form the breathable laminate.

Generally, in one aspect, a breathable laminate is provided. The breathable laminate includes a porous film. The porous film includes a heat sealable polymeric material.

The breathable laminate further includes a backing substrate. The backing substrate includes a porous material. The backing substrate is affixed to the porous film via patterned lamination.

According to an example, the porous film has a melting point of about 80°C to about 200°C.

According to an example, the porous film has a Gurley value of at least about 10 seconds per 100 cc and the backing substrate has a Gurley value of at least about 10 seconds per 100 cc.

According to an example, the breathable laminate has a Gurley value of less than about 1500 seconds per 100 cc.

According to an example, the porous film has a thickness of about 5 µm to about 50 µm.

According to an example, the backing substrate has a thickness of about 10 µm to about 1000 µm.

According to an example, the breathable laminate further includes a patterned adhesive affixing the porous film to the backing substrate.

According to an example, the patterned adhesive includes an array of dots, circles, rectangles, rhomboids, stars, ovals, or lines.

Generally, in another aspect, a method for manufacturing a breathable laminate is provided. The method includes forming a lamination pattern on a porous film or a backing substrate. The porous film includes a heat sealable polymeric material. The backing substrate includes porous material.

The method further includes laminating the porous film to the backing substrate.

According to an example, the porous film has the melting point of about 80°C to about 200°C.

According to an example, the lamination pattern includes a patterned adhesive. The patterned adhesive is applied to the backing substrate.

According to an example, the patterned adhesive is applied to the backing substrate via a gravure, flexographic, offset, hot melt, spray, or template application.

According to an example, the lamination pattern includes a heated contact pattern formed on the porous film.

According to an example, the method further includes heat-sealing a portion of the breathable laminate to a secondary structure at a sealing temperature.

According to an example, the sealing temperature ranges from about 80°C to about 250°C.

Generally, in a further aspect, a container or a bag is provided. The container or the bag includes a breathable laminate.

The container or the bag further includes a secondary structure. A portion of the breathable laminate is heat sealed to the secondary structure such that a peel strength between the breathable laminate and the secondary structure is from about 0.3 lbf/inch to about 6 lbf/inch.

According to an example, the breathable laminate includes a porous film.

According to an example, the porous film includes a heat sealable biaxially oriented polymeric material.

According to an example, the porous film is affixed to a backing substrate comprises a porous material.

According to an example, a patterned adhesive affixes the porous film to the backing substrate.

According to an example, the porous film has a melting point of about 80°C to about 200°C.

These and other aspects of the various embodiments will be apparent from and elucidated with reference to the embodiments described hereinafter.

### Brief Description of the Drawings

In the drawings, like reference characters generally refer to the same parts throughout the different views. Also, the drawings are not necessarily to scale, emphasis instead generally being placed upon illustrating the principles of the various embodiments.
FIG. 1 is a cross-section of a breathable laminate, in accordance with aspects of the present disclosure.
FIG. 2 is an illustration of a patterned adhesive deposited on a backing substrate, in accordance with aspects of the present disclosure.
FIG. 3 is an illustration of an adhesive template for depositing a patterned adhesive, in accordance with aspects of the present disclosure.
FIG. 4 is a cross-section of a portion container having breathable laminate heat sealed to a secondary structure, in accordance with aspects of the present disclosure.
FIG. 5 is a flowchart illustrating a method for manufacturing a breathable laminate, in accordance with aspects of the present disclosure.

### Detailed Description of Embodiments

The present disclosure is generally directed to breathable lidding, a breathable bag, or breathable pouch material for medical packaging. In particular, the breathable lidding or the breathable pouch material is used for medical device packaging to enable sterilization via, for example, ethylene oxide (EtO) gas sterilization, while still providing a microbial barrier and/or a particulate barrier to prevent contamination of the medical device. Similar to building grade house wrap or breathable water barriers, the breathable lidding of the present disclosure allows the desired EtO gas to pass through while stopping unwanted water, dust, and/or contaminates. The breathable lidding may be embodied as a breathable laminate. The breathable laminate may include a porous film affixed to a backing substrate. The backing substrate may also be breathable. The porous film acts as a sealing layer to seal to a secondary structure (such as a tray or second film). The porous film comprises a heat sealable, polymeric material, such as polyolefin. The polymeric material may be monoaxially or biaxially oriented. Further, the porous film may have a melting point between about 80°C to about 200°C. The backing substrate may be a breathable, woven or non-woven, natural or synthetic, fibrous material, such as medical-grade paper. In other examples, the backing substrate could be another porous polymeric film. The porous film is affixed to the backing substrate via patterned lamination, such as patterned adhesive lamination or patterned heat lamination, thereby preserving the overall breathability of the laminate while eliminating the need to apply a heat seal coating to the backing substrate. The lamination pattern used in the patterned lamination process may include an array of adhesive shapes, such as dots, circles, ovals, rectangles, lines, stars, rhomboids, etc. The coverage of the lamination pattern can be adjusted to achieve the desired breathability of the overall breathable laminate. Further, sealing the porous film to the secondary structure results in the formation of seal evidence providing visible proof of the formation of the heat seal to the secondary structure.

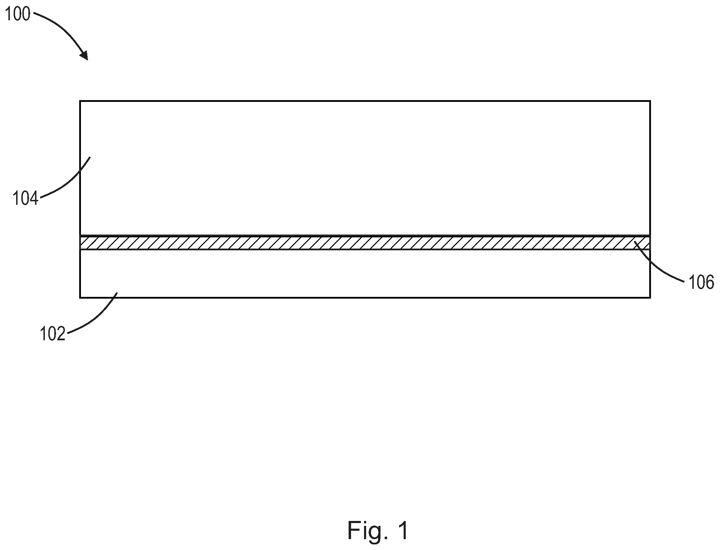

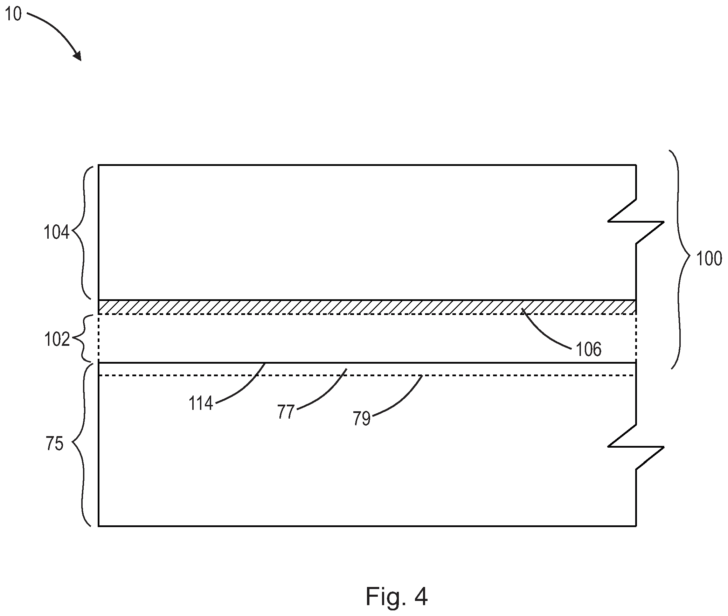

Turning to the figures, FIG. 1 is a cross-section of a non-limiting example of breathable lidding in the form of a breathable laminate 100. Broadly, the breathable laminate 100 includes a porous film 102 and a backing substrate 104. The porous film 102 is affixed to the backing substrate 104 via a lamination pattern embodied as a patterned adhesive 106. As will be described in greater detail, the porosity of the porous film 102, the backing substrate 104, and the patterned adhesive 106 allows certain sterilizing gases (such as EtO) to pass through while still blocking microbes. Further, the melting properties of the material composition of the porous film 102 allows the breathable laminate 100 to be heat sealed to a secondary structure 75 (see FIG. 4), such as a tray or another film.

The porous film 102 may be formed from a polymeric material. In some examples, the polymeric material may be monoaxially or biaxially orientated. In further examples, the polymeric material may be polyethylene, such as a biaxially oriented polyethylene (BOPE). The porous film 102 may be formed from a polymeric material having a melting point ranging from about 80°C to about 200°C, such as about 130°C. In particular various embodiments, the polymeric material of the porous film 102 can have a melting point of from about 80°C to about 200°C, including from about 80°C to about 90°C, from about 90°C to about 100°C, from about 100°C to about 110°C, from about 110°C to about 120°C, from about 120°C to about 130°C, from about 130°C to about 140°C, from about 140°C to about 150°C, from about 150°C to about 160°C, from about 160°C to about 170°C, from about 170°C to about 180°C, from about 180°C to about 190°C, from about 190°C to about 120°C, and/or a range having any combination of endpoints thereof. In particular examples, such as when the polymeric material is polyethylene, the melting point may range from about 120°C to about 140°C.

The porous film 102 may have a thickness of at least about 5 µm. Further, the porous film 102 may have a thickness of at most about 30 µm. In particular various embodiments, the porous film 102 can have a thickness of from about 5 µm to about 30 µm, including from about 5 µm to about 10 µm, from about 10 µm to about 15 µm, from about 15 µm to about 20 µm, from about 20 µm to about 25 µm, from about 25 µm to about 30 µm, and/or a range having any combination of endpoints thereof.

Based on the aforementioned thickness values and the porous nature of the porous film 102, the porous film 102 may have a Gurley value of at least 20 seconds per 100 cc. Further, the porous film 102 may have a Gurley value of at most 600 seconds per 100 cc. In particular various embodiments, the porous film 102 can have a Gurley value of from about 20 seconds per 100 cc to about 30 seconds per 100 cc, from about 30 seconds per 100 cc to about 40 seconds per 100 cc, from about 40 seconds per 100 cc to about 50 seconds per 100 cc, from about 50 seconds per 100 cc to about 60 seconds per 100 cc, from about 60 seconds per 100 cc to about 70 seconds per 100 cc, from about 70 seconds per 100 cc to about 80 seconds per 100 cc, from about 80 seconds per 100 cc to about 90 seconds per 100 cc, from about 90 seconds per 100 cc to about 100 seconds per 100 cc, and/or a range having any combination of endpoints thereof.

A Gurley value describes the air permeability of a material in terms of the time required for an amount of air to pass through the material. Thus, a Gurley value of 20 seconds per 100 cc for the porous film 102 indicates that 100 cc or air would pass through the porous film 102 in 20 seconds. The Gurley values of the porous film 102 and other structures defined herein (including the backing substrate 104 and the overall breathable laminate 100) were determined in accordance with ISO 5636-5: Determination of Air Permeance (Medium Range) - Part 5: Gurley, as referenced in ISO 11607-1:2019 Annex C.

The backing substrate 104 is affixed to the porous film 102 to, in some examples, provide the breathable laminate 100 with a physical structure that is easier to arrange and manipulate. The backing substrate 104 is formed from a fibrous material, which may be natural or synthetic, woven or non-woven. The material forming the backing substrate 104 typically has a much higher melting point than the porous film 102, such that backing substrate 104 does not melt or burn when the porous film 102 is heat sealed to the secondary structure 75.

In some examples, the backing substrate 104 comprises medical grade paper. Medical grade paper typically provides higher tensile strength and tear strength as compared to standard packaging grade paper substrates. Medical grade paper also has stronger fiber to fiber bonds than non-medical grade paper enabled by entangling longer fibers. Further, medical grade paper must be porous to enable sterilization (such as via EtO gas), while still providing a barrier to prevent microbes, dust, and other potential contaminants from breaching the medical grade paper. Additionally, medical grade paper provides clean peelability over non-medical grade paper, such that the medical grade paper may be peeled away from a film or structure without leaving behind particles or fibers. In some examples, the medical grade paper conforms to the ISO 11607 standard for medical device packaging.

The backing substrate 104 is generally significantly thicker than the porous film 102. Accordingly, the backing substrate 104 may have a thickness of at least about 5 µm. Further, the backing substrate 104 may have a thickness of at most about 1000 µm. In particular various embodiments, the backing substrate 104 can have a thickness of from about 5 µm to about 400 µm, including from about 5 µm to about 50 µm, from about 50 µm to about 100 µm, from about 100 µm to about 200 µm, from about 200 µm to about 300 µm, from about 300 µm to about 400 µm, from about 400 µm to about 600 µm, from about 600 µm to about 800 µm, from about 800 µm to about 1000 µm, and/or a range having any combination of endpoints thereof.

Like the porous film 102, the backing substrate 104 must also be porous or breathable to enable sterilization procedures. The backing substrate 104 may have a Gurley value of at least 10 seconds per 100 cc. Further, the backing substrate 104 may have a Gurley value of at most 600 seconds per 100 cc. In particular various embodiments, the backing substrate 104 can have a Gurley value of from about 10 seconds per 100 cc to about 20 seconds per 100 cc, from about 20 seconds per 100 cc to about 30 seconds per 100 cc, from about 30 seconds per 100 cc to about 40 seconds per 100 cc, from about 40 seconds per 100 cc to about 50 seconds per 100 cc, from about 50 seconds per 100 cc to about 60 seconds per 100 cc, from about 60 seconds per 100 cc to about 70 seconds per 100 cc, from about 70 seconds per 100 cc to about 80 seconds per 100 cc, from about 80 seconds per 100 cc to about 90 seconds per 100 cc, from about 90 seconds per 100 cc to about 100 seconds per 100 cc, from about 100 seconds per 100 cc to about 200 seconds per 100 cc, from about 200 seconds per 100 cc to about 300 seconds per 100 cc, from about 300 seconds per 100 cc to about 400 seconds per 100 cc, from about 400 seconds per 100 cc to about 500 seconds per 100 cc, from about 500 seconds per 100 cc to about 1500 seconds per 100 cc, and/or a range having any combination of endpoints thereof.

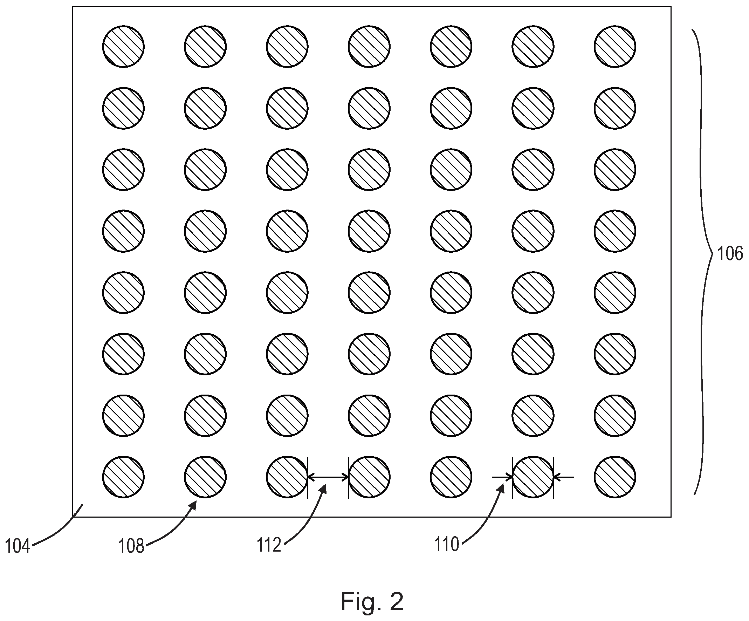

The porous film 102 is affixed to the backing substrate 104 via the patterned adhesive 106 through a patterned adhesive lamination process. As will be shown in FIG. 2, the patterned adhesive 106 is formed by an array of discrete adhesive contacts 108 on the backing substrate 104. Contact spacing 112 between the discrete adhesive contacts 108 enables the overall breathable laminate 100 to be permeable. In some examples, the breathable laminate 100 as a whole may have a Gurley value of at most 1500 seconds per 100 cc. In a preferred embodiment, the Gurley value of the breathable laminate ranges from 60 seconds per 100 cc to 300 seconds per 100 cc. The adhesive material to form the patterned adhesive 106 may be solvent-based, solvent-less, or water-based. In some examples, the adhesive material may be polyurethane. Once the patterned adhesive 106 is formed on the backing substrate 104, the breathable laminate 100 of FIG. 1 may be formed by arranging the porous film 102 on the patterned adhesive 106 and pressing the porous film 102 and the backing substrate 104 together at a lamination temperature. The lamination temperature may be greater than or equal to 20°C while also being less than the melting point of the porous film 102.

In other examples, the lamination pattern may instead be embodied as a heated contact pattern. The heated contact pattern is formed on the face of the porous film 102 arranged to contact the backing substrate 104 during a patterned heat lamination process. As such, patterned heat lamination does not require an additional adhesive to affix the porous film to the backing substrate 104, and instead simply melts the heated contact pattern into the porous film 102 to enable the patterned lamination process. The heated contact pattern may be formed through a wide variety of heating methods, such as electric heating, ultra sonic heating, laser energy heating, etc. The heated contact pattern may be similar in configuration to the aforementioned array of discrete adhesive contacts 108, thereby enabling the overall breathable laminate 100 to be sufficiently permeable.

FIG. 2 illustrates an example of the patterned adhesive 106 applied to a portion of the backing substrate 104. As described above, the patterned adhesive 106 is embodied as an array of discrete adhesive contacts 108. The discrete adhesive contacts 108 of FIG. 2 are shown as dots or circles. However, in other examples, the discrete adhesive contacts 108 could be squares, rectangles, rhomboids, stars, ovals, lines, or any other practical shape. As shown in FIG. 2, the discrete adhesive contacts 108 are defined by consistent contact diameter 110 and are arranged according to a consistent contact spacing 112. In some examples, the contact diameter 110 may range from about 0.4 cm to about 0.6 cm, such as about 0.5 cm. Similarly, the contact spacing 112 may range from about 0.4 cm to about 0.6 cm, such as about 0.5 cm. In another example, the contact diameter 110 may range from about 1.0 mm to about 2.0 mm with about 1.0 mm to about 1.5 mm of contact spacing 112. The contact diameter 110 and the contact spacing 112 shown in FIG. 2 can be adjusted to achieve the desired permeability of the entire breathable laminate 100. For example, if increased permeability is desired, the contact diameter 110 of the adhesive contacts 108 may be reduced and/or the contact spacing 112 between the adhesive contacts 108 may be increased. Conversely, if increased adhesion between the porous film 102 and the backing substrate 104 is desired, the contact diameter 110 of the adhesive contacts 108 may be increased and/or the contact spacing 112 between the adhesive contacts 108 may be reduced.

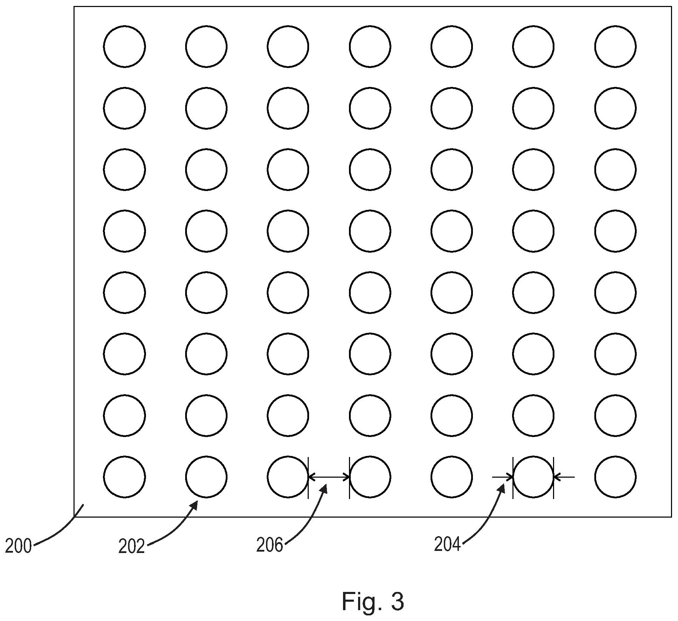

The patterned adhesive 106 may be applied to the backing substrate 104 using an adhesive template 200 shown in FIG. 3. As shown in FIG. 3, the adhesive template 200 comprises an array of adhesive holes 202. The adhesive holes 202 are sized according to a hole diameter 204 corresponding to the desired contact diameter 110 and a hole spacing 206 corresponding to the desired contact spacing 112. The adhesive template 200 may be made of any appropriate material, such as a metal. In other examples, an industrial-engraved cylinder equipped with a pattern may be used to apply the patterned adhesive 106.

The patterned adhesive 106 may be formed by positioning the adhesive template 200 over the backing substrate 104. An adhesive material may then be applied to the adhesive template 200, such that a portion of the adhesive material passes through the adhesive holes 202 to form the patterned adhesive 106 on the backing substrate 104. If the adhesive material includes a solvent, the adhesive template 200 is removed and the backing substrate 104 is heated to a solvent removal temperature (such as at least about 40°C) for a solvent removal period (such as about one minute to about two minutes) to evaporate the solvent from the adhesive material.

The adhesive template 200 of FIG. 3 is just one example of a method for applying adhesive material to the backing substrate 104. In some examples, the circular adhesive holes 202 of FIG. 3 may have a different shape, such as square, rectangular, rhomboidal, star-shaped, oval, line-shaped, or any other practical shape. Further, the adhesive material may be applied to the backing substrate via other means, such as gravure, flexographic, offset, hot melt, or spray application.

FIG. 4 shows a portion of a cross-section of a sealed container 10. In the non-limiting example of FIG. 4, the breathable laminate 100 of FIG. 1 is heat sealed to a secondary structure 75. Heat seal 114 is shown in FIG. 4 as affixing the porous film 102 to the secondary structure 75. In some examples, the secondary structure 75 is a rigid structure, such as a plastic tray to house a medical device (such as a syringe, catheter, etc.). In other examples, the secondary structure 75 may be a flexible film, thereby forming a flexible pouch when heat-sealed to breathable laminate 100. FIG. 4 is provided to illustrate a portion of the secondary structure 75 that is head sealed to the breathable laminate 100. For example, the portion of the secondary structure 75 shown in FIG. 4 could correspond to a flange of a tray sealed to the breathable laminate 100. One skilled in the art would understand that significant portions of the secondary structure 75 would not be sealed to the breathable laminate 100.

In some examples, heat sealing the polymeric material (such as polyethylene) of the porous film 102 to the secondary structure 75 results in the formation of seal evidence where the seal is formed. This seal evidence may be particularly important in medical device applications to ensure that the medical device has not been exposed to microbes and other contaminants. When inspecting the seal by looking down on the backing substrate 104 of the breathable laminate 100, the seal evidence may be seen in the form of a modified texture of the backing substrate where the seal is formed due to the porous film 102 penetrating into the backing substrate 104 when melted. When the porous film 102 is peeled away from the secondary structure 75, additional seal evidence may be observed in the format of a translucent or clear heat seal section of the porous film 102. This translucent or clear heat seal section is formed due to the melting of the porous film 102 during the heat seal process. In some examples, this translucent or clear heat seal section may be visible prior to peeling if the secondary structure 75 is also clear.

In some examples, the secondary structure 75 comprises a peelable layer 77. When pulled away from the secondary structure 75, the peelable layer 77 separates from the secondary structure 75 along peelable seal 79. The peelable layer 77 may be made of any practical material. For example, the peelable layer 77 may be polyethylene-based, i.e., may comprise and/or consist essentially of polyethylene. Accordingly, the heat seal 144 shown in FIG. 4 is formed between the porous film 102 and the peelable layer 77. Thus, as a peeling force is applied to the breathable laminate 100, the porous film 102 pulls the peelable layer 77 away from the secondary structure 75 along the peelable seal 79. In some examples, the peel strength required to pull the breathable laminate 100 away from the secondary structure 75 is about 0.3 lbf/inch to about 6.0 lbf/inch, such as about 1 lbf/inch to 3 lbf/inch, when measured according to the ASTM F88 standard.

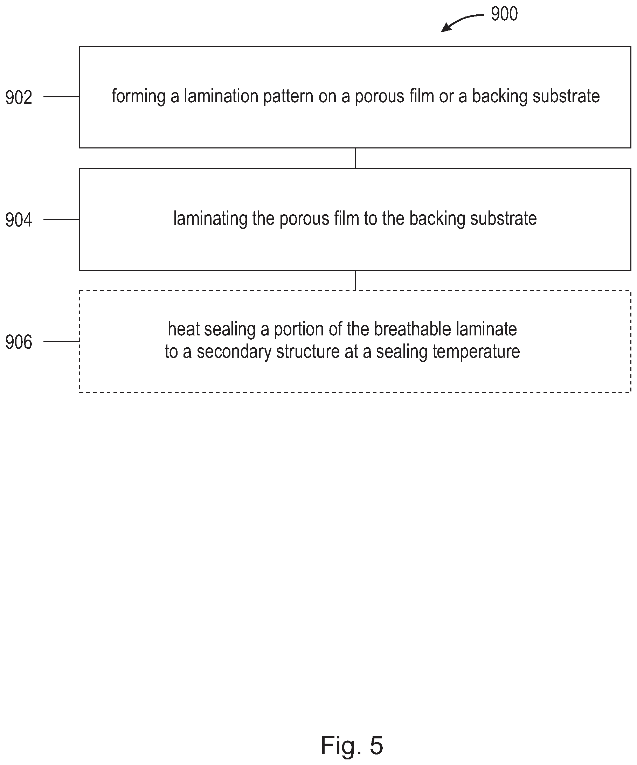

FIG. 5 is a flowchart illustrating a method 900 for manufacturing a breathable laminate 100. With respect to FIGS. 1-5, the method 900 includes, in step 902, forming a lamination pattern on a porous film 102 or a backing substrate 104. The porous film 102 includes a heat sealable polymeric material. The backing substrate 104 includes fibrous material.

The method 900 further includes, in step 904, laminating the porous film 102 to the backing substrate 104.

The method 900 further includes, in optional step 906, heat-sealing a portion of the breathable laminate 100 to a secondary structure 75 at a sealing temperature.

### EXAMPLE

In accordance with aspects of the present disclosure, various tests were performed on the samples discussed below using corresponding ISO and ASTM standards.

In one example, the porous film 102 used for testing purposes was a biaxially oriented polyethylene film. In particular, the porous film 102 was a 9EP breathable membrane sold by ENTEK^{®}. This particular porous film 102 had a thickness of 9 microns and a measured Gurley value of 93.9 +/- 9.3 seconds per 100 cc. The porous film has a melting point of about 130°C. The Gurley values of the porous film 102 and other structures (including the backing substrate 104 and the overall breathable laminate 100) tested in this example were determined in accordance with ISO 5636-5: Determination of Air Permeance (Medium Range) - Part 5: Gurley, as referenced in ISO 11607-1:2019 Annex C. This porous film 102 had a nominal porosity of 44%.

Further to this example, the backing substrate 104 used was CPS 60g medical-grade paper sold by PELTAMED^{™}. The medical-grade paper had a thickness of 80 microns and a Gurley value of 71.3 +/- 3.7 seconds per 100 cc.

As described above, the patterned adhesive 106 was used to affix the porous film 102 to the backing substrate 104. A dot-pattern adhesive template 200, similar to the adhesive template 200 shown in FIG. 3, was used to apply the patterned adhesive 106 in the form of an array of discrete adhesive contacts 108 to the backing substrate 104. The adhesive template 200 included an array of adhesive holes 202 with a hole diameter 204 of 0.5 cm and a hole spacing 206 of 0.5 cm. In this example, the adhesive material used to form the patterned adhesive 106 was solvent-based TYCELL^{®} 7966 polyurethane. This design ensures breathability, as the overall Gurley value for the breathable laminate 100 is less than 300 seconds per 100 cc (measured as 209.5 +/-16.7 seconds per 100 cc). This overall Gurley value is directly influenced by the dimensions and spacing of the adhesive contacts 108. Accordingly, the hole diameter 204 and the hole spacing 206 of the adhesive template 200 may be modified to adjust the overall Gurley value of the breathable laminate 100.

Once the solvent-based adhesive material was deposited on the backing substrate 104 via the adhesive template 200, the backing substrate 104 was placed in an oven set to 60°C for approximately one to two minutes to burn off the solvent of the adhesive material and form the patterned adhesive 106. The porous film 102 was then placed on the backing substrate 104 (with the patterned adhesive 106 between the porous film 102 and the backing substrate 104). The porous film 102 and the backing substrate 104 were then pressed together using a Carver hydraulic unit model number 3912 press machine. The porous film 102 and the backing substrate 104 were pressed together for about 30 seconds under a pressure of 0.2 metric tons to form the breathable laminate 100.

Once the breathable laminate 100 was formed, the porous film 102 of the breathable laminate 100 was heat sealed to the peelable layer 77 of the secondary structure 75 (as shown in FIG. 4). The heat-sealing was performed according to the ASTM F2029 standard. The heat-sealing occurred at a pressure of 4 bars with a dwell time of 1.5 seconds, similar to the heat-sealing process used by most medical device manufacturers. The desired peel strength for these applications ranges from 1 lbf/inch to 3 lbf/inch.

As will be seen below in Table 1, data regarding Gurley values was collected for five samples of (1) the porous film 102 by itself and (2) the breathable laminate 100 as a whole.

**TABLE 1. GURLEY RESULTS**

| **Sample Type** | **Gurley Sample 1 (s/100 cc)** | **Gurley Sample 2 (s/100 cc)** | **Gurley Sample 3 (s/100 cc)** | **Gurley Sample 4 (s/100 cc)** | **Gurley Sample 5 (s/100 cc)** | **Gurley Average (s/100 cc)** |
|---|---|---|---|---|---|---|
| Porous Film | 98.1 | 99.8 | 101 | 94.8 | 75.8 | 93.9 +/-9.28 |
| Breathable Laminate | 238 | 213.4 | 190.4 | 195.2 | 210.5 | 209.5 +/-16.72 |

Further, Table 2 below shows the peel strength values of (1) the porous film 102 heat sealed to the secondary structure 75 and (2) the breathable laminate 100 (the porous film 102 affixed to the backing substrate 104 via the patterned adhesive 106) heat sealed to secondary structure 75.

The peel testing was performed according to the ASTM F88 standard using an INSTRON^{®} 5944 tensile strength testing machine equipped with a 1 kN load cell. Testing was conducted at an ambient temperature, with a crosshead speed of 150 mm/min.

As shown, at the elevated heat-sealing temperatures of 180°C to 200°C, the measured peel strength values fall within a desirable range of 1 lbf/inch to 3 lbf/inch. Further, Table 2 shows that the porous film 102 became transparent (or clear) during the heat-sealing process, allowing for visual inspection of the heat seal 114.

**TABLE 2. PEEL STRENGTH RESULTS**

| **Sample Type** | **Sealed Temperature (°C)** | **Seal Strength (lbf/inch)** | **Seal Evidence** |
|---|---|---|---|
| Porous Film | 180 | 1.55 +/- 0.02 | Clear |
| | 190 | 1.52 +/- 0.01 | Clear |
| | 200 | 1.55 +/- 0.03 | Clear |
| Breathable Laminate | 180 | 1.95 +/- 0.02 | Clear |
| | 190 | 1.62 +/- 0.20 | Clear |
| | 200 | 1.30 +/- 0.02 | Clear |

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

All definitions, as defined and used herein, should be understood to control over dictionary definitions, definitions in documents incorporated by reference, and/or ordinary meanings of the defined terms. Unless otherwise defined, all technical and scientific terms used herein have the same meaning as commonly understood by one of ordinary skill in the art. The materials, methods, and examples disclosed herein are illustrative only and not intended to be limiting.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

The terms "first", "second", "third", and the like, as used herein, do not denote any order, quantity, or importance, but rather are used to distinguish one element from another.

For the recitation of numeric ranges herein, each intervening number there between with the same degree of precision is explicitly contemplated. For example, for the range of 6-9, the numbers 7 and 8 are contemplated in addition to 6 and 9, and for the range 6.0-7.0, the number 6.0, 6.1, 6.2, 6.3, 6.4, 6.5, 6.6, 6.7, 6.8, 6.9, and 7.0 are explicitly contemplated.

As used herein, approximating language may be applied to modify any quantitative representation that may vary without resulting in a change in the basic function to which it is related. Accordingly, a value modified by a term or terms, such as "about" and "substantially," may not be limited to the precise value specified, in some cases. In at least some instances, the approximating language may correspond to the precision of an instrument for measuring the value. The modifier "about" should also be considered as disclosing the range defined by the absolute values of the two endpoints. For example, the expression "from about 2 to about 4" also discloses the range "from 2 to 4." The term "about" may refer to plus or minus 10% of the indicated number. For example, "about 10%" may indicate a range of 9% to 11%, and "about 1" may mean from 0.9-1.1. Other meanings of "about" may be apparent from the context, such as rounding off, so, for example "about 1" may also mean from 0.5 to 1.4.

Additionally, for the recitations of numeric amounts and ranges herein, terms such as "less than about X" and "at least about X" should be interpreted as also explicitly disclosing "about X". For example, "less than about 3 g/10 min." expressly contemplates "about 3 g/10 min.", and "at least 60 g/10 min." expressly contemplates "about 60 g/10 min."

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, the aldehyde group -CHO is attached through the carbon of the carbonyl group.

As used herein, the terms "wt %" or "weight percent" denote the amount (i.e., weight) of a component per 100 units of the composition (i.e., 1 wt % of component A based on the weight of the composition is equivalent to 1 gram of A per 100 grams of the composition).

The terms "ambient temperature" and "room temperature" refer to a temperature of 20° C to 25° C.

The present disclosure may refer to temperatures for certain process steps. It is noted that these generally refer to the temperature at which the heat source (e.g., furnace, extrusion machine, etc.) is set, and do not refer to the temperature which must be attained by the material being exposed to the heat.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, the aldehyde group -CHO is attached through the carbon of the carbonyl group.

It should also be understood that, unless clearly indicated to the contrary, in any methods claimed herein that include more than one step or act, the order of the steps or acts of the method is not necessarily limited to the order in which the steps or acts of the method are recited.

## Claims

1. A breathable laminate, comprising:
a porous film comprising a heat sealable polymeric material; and
a backing substrate comprising a porous material, wherein the backing substrate is affixed to the porous film via patterned lamination.

2. The breathable laminate of claim 1, wherein the porous film has a melting point of about 80°C to about 200°C.

3. The breathable laminate of claim 1 or claim 2, wherein:
the porous film has a Gurley value of at least about 10 seconds per 100 cc and the backing substrate has a Gurley value of at least about 10 seconds per 100 cc; and / or
the breathable laminate has a Gurley value of less than about 1500 seconds per 100 cc.

4. The breathable laminate of any preceding claim, wherein:
the porous film has a thickness of about 5 µm to about 50 µm; and / or
the backing substrate has a thickness of about 10 µm to about 1000 µm.

5. The breathable laminate of any preceding claim, further comprising a patterned adhesive affixing the porous film to the backing substrate.

6. The breathable laminate of claim 5, wherein the patterned adhesive comprises an array of dots, circles, rectangles, rhomboids, stars, ovals, or lines.

7. A method for manufacturing a breathable laminate, comprising:
forming a lamination pattern on a porous film or a backing substrate, wherein the porous film comprises a heat sealable polymeric material, and wherein the backing substrate comprises porous material; and
laminating the porous film to the backing substrate.

8. The method of claim 7, wherein the porous film has a melting point of about 80°C to about 200°C.

9. The method of claim 7 or claim 8, wherein the lamination pattern comprises a patterned adhesive, and optionally wherein the patterned adhesive is applied to the backing substrate.

10. The method of claim 8 or claim 9, wherein the patterned adhesive is applied to the backing substrate via a gravure, flexographic, offset, hot melt, spray, or template application.

11. The method of any one of claims 6 to 10, wherein the lamination pattern comprises a heated contact pattern formed on the porous film.

12. The method of any one of claims 6 to 11, further comprising heat-sealing a portion of the breathable laminate to a secondary structure at a sealing temperature.

13. The method of claim 12, wherein the sealing temperature ranges from about 80°C to about 250°C.

14. A container, comprising:
the breathable laminate of any one of claims 1 to 6; and
a secondary structure, wherein a portion of the breathable laminate is heat sealed to the secondary structure such that a peel strength between the breathable laminate and the secondary structure is from about 0.3 lbf/inch to about 6 lbf/inch.

15. The container of claim 14, wherein the porous film comprises a heat sealable biaxially oriented polymeric material.
